# EUROPEAN PATENT SPECIFICATION

(11) **EP 2 604 395 B1**
(45) Date of publication and mention of the grant of the patent: **20.05.2015**
(21) Application number: 12194334.4
(22) Date of filing: 27.11.2012
(51) Int. Cl.: B25F 5/00, H01R 13/58

(54) **Electric supply cable sheath for a power tool**
Stromversorgungskabelummantelung für ein elektrisches Werkzeug
Gaine de câble d'alimentation électrique pour outil électrique

(30) Priority: 13.12.2011 CN 201110413543
(43) Date of publication of application: 19.06.2013
(73) Proprietor: Black & Decker Inc., Newark, Delaware 19711 (US)
(72) Inventor: Li, Quigyang, Suzhou (CN); Ling, Chunliang, Suzhou (CN); Yang, Yaping, Suzhou (CN)
(74) Representative: Bell, Ian Stephen

(56) References cited:
- WO-A2-2009/055681
- WO-A2-2010/002776
- US-A- 6 152 639
- US-A1- 2003 127 932
- US-A1- 2009 219 118
- US-A1- 2009 258 509
- US-A1- 2010 124 837
- US-A1- 2010 261 388

## Description

The present invention relates to an electric supply cable sheath for a power tool.

Power tools are commonly operated by an electric motor for driving a work tool to perform a machining operation on a work-piece. The motor requires electric power which is usually delivered by an electric supply cable. The supply cable couples the motor to an external electric power source such a mains electric power socket or a portable electric power generator. The electric supply cable is typically made of flexible material so that it may be connected to the electric power source without limiting movement of the power tool. Over time, repetitive flexing of the electric supply cable may cause damage, especially at locations where it comes into contact with other bodies. One such location, where the electric supply cable is particularly vulnerable, is a cable outlet from the power tool's housing in which the motor is located. Sideward movement contorts the electric supply cable against the cable outlet. To mitigate the detrimental effect of this contortion, a protective cable sheath is clad around a portion of the electric supply cable where it projects through the cable outlet. The protective sheath stiffens the electric supply cable and provides an additional layer to protect against wear cause by friction. The sheath noticeably reduces maneuverability of the power tool unless some degree of movement between the sheath and the cable outlet is provided.

Patent publication number DE 43 44 635 discloses a power tool with an electric motor coupled to an external electric power source by an electric supply cable. The electric supply cable is projected though the power tool's housing via a cable outlet. A protective sheath is clad around a portion of the electric supply cable projected through the cable outlet. One end of the sheath has a ball supported for rotation by a spherical socket in the housing. A spring-loaded detent engages indentations in the ball.

Patent publication number DE 199 52 643 discloses a housing for a power tool with an electric motor coupled to an external electric power source by an electric supply cable. The electric supply cable is projected though a cable outlet with a rotatable element surrounding a portion of the electric supply cable. A resilient detent engages notches in the rotatable element.

A drawback of the arrangements disclosed by DE 43 44 635 and DE 199 52 643 is that the electric supply cable, and its protective sheath, may be misaligned when unintentionally knocked or when the power tool is re-orientated between machining operations. The user must take the trouble to re-align the sheath to its proper position or, alternatively, tolerate a misaligned electric supply cable until realignment of the sheath is possible. It is an object of the present invention to provide a power tool with improved control over movement between the protective sheath and the cable outlet.

Accordingly, the present invention provides a power tool in accordance with claim 1.

US 2003/0127932 and US 6,152,639 disclose power tools having power cords which exit the power tool through a sheaf, the sheaf being pivotal about an axis perpendicular to the longitudinal axis of the sheaf.

WO 2009/055681 and US 2013/3124837 disclose a pivotal backshell couplings for electric cables.

WO 2010/002776 discloses a strain relief for an electric cable of a power tool.

US 2010/0261388 discloses an angled connector.

With the present invention unintentional rotational force applied to the cable sheath is blocked by the locking means. The sheath may be rotated in relation to the cable outlet, but not before the locking means has been unlocked by a deliberate application of force from the sheath against the biasing means. This has the added advantage of providing the user with tactile and positive feedback of locking means operation.

Preferably, movement of the sheath against the biasing means is along the cable outlet central axis. The user may easily manoeuvre the sheath to push, or pull, it along the cable outlet axis to firstly unlock the locking means by axial movement and then secondly apply rotational movement to the sheath.

Preferably, the cable outlet comprises a hollow substantially cylindrical cable outlet collar to support movement of the sheath along the cable outlet central axis. The cylindrical cable outlet collar provides directional support for the sheath as it slides inside.

Preferably, the cable outlet collar comprises an annular bearing through which projects the sheath and wherein the annular bearing supports the biasing means against the sheath. The bearing provides additional directional support for the sheath as slides inside the cylindrical outlet collar as well as supporting the biasing means.

Preferably, the sheath comprises an annular flange fixed around the sheath and wherein an interior surface of the outlet collar supports movement of the annular flange with respect to the cable outlet. The interior surface provides additional directional support for the sheath as slides inside the cylindrical cable outlet collar.

Preferably, the biasing means is held in compression between the bearing, the annular flange and the interior surface of the cable outlet collar. Any tendency of the biasing means to bulge outwardly when under compression is contained by this arrangement. The annular flange distributes the axial force of the biasing means evenly around the sheath.

Preferably, the biasing means comprises a helical spring coiled around the sheath. The helical spring fits neatly in an annular chamber enclosed between the sheath and the interior surface of the cable outlet collar.

Preferably, the receiving member comprises a ring with a plurality of grooves facing the engaging member, wherein the grooves are arranged at angular intervals about the cable outlet central axis and wherein each groove corresponds to one of the plurality of rotational orientations of the sheath in relation to the cable outlet. The grooves may be easily arranged to suit different configurations of rotational orientations.

Preferably, the engaging member comprises at least one tongue protruding radially outward from the sheath and wherein the ring comprises a cable outlet ring fixed to the cable outlet collar. The tongue and groove arrangement provides reliable and compact locking means.

Preferably, the at least one tongue is connected to a side of the annular flange facing the plurality of grooves. The annular flange may support and strengthen the at least one tongue in an axial direction and in a rotational direction.

Preferably, the annular flange abuts the cable outlet ring upon engagement of the engaging and receiving members. The annular flange transfers the majority of the axial force applied by the biasing means to the cable outlet ring. This protects the at least one tongue from fatigue caused by repetitive application of axial forces.

Preferably, sides of the at least one tongue and the grooves are substantially parallel with the cable outlet central axis. This arrangement provides a more positive engagement between the engaging and receiving members and a more tactile feedback of engagement to the user.

Preferably, the sheath is kinked to direct unprotected electric supply cable at an inclined angle of substantially forty five degrees from the cable outlet central axis and wherein two of the plurality of rotational orientations of the sheath are diametrically opposed. Rotation of the sheath from one diametrically opposed orientation to the other re-directs the unprotected electric supply cable to a new direction perpendicular to the original direction.

Preferably, the plurality of rotational orientations of the sheath comprises two rotational orientations. This avoids over-crowding the receiving member.

Preferably, the sheath is fixed to the electric supply cable and / or the sheath is formed of rigid rubber material. Fixation of the sheath to the electric supply cable simplifies assembly of the power tool by unifying these to two parts. Rigid rubber material is easily moulded around, and adhered to, insulation material clad around the electric supply cable. The resilience of rubber material makes it suitable for protecting the electric supply cable from physical shocks.

Preferably, the power tool comprises a circular saw with a base plate, wherein the work tool comprises a circular saw blade with a central axis and wherein the height and / or the angle of inclination of the circular saw blade central axis in relation to the base plate are / is adjustable. The configuration of a circular saw may be altered to different depth, or angle, of cut and it is advantageous to change the orientation of the sheath to suit the preferences of the user who may be left or right handed or who may be constrained to perform a machining operation in a tight space.

Further features and advantages of the present invention will be better understood by reference to the following description, which is given by way of example and in association with the accompanying drawings, in which:
Figure 1 shows a side elevation view of a hand-holdable circular saw with a circular saw blade;
Figure 2 shows a plan view of the circular saw of Figure 1 with a protective electric cable sheath in a rearward orientation parallel to the saw blade;
Figure 3 shows a plan view of the circular saw of Figure 1 with the sheath in a sideward orientation perpendicular to the saw blade;
Figure 4 shows a perspective view of the sheath;
Figure 5A shows a horizontal cross-section V-V through a cable outlet of the circular saw and the sheath in the rearward orientation;
Figure 5B shows the horizontal cross-section V-V with the sheath in the sideward orientation;
Figure 6A shows a vertical cross-section VI-VI through the cable outlet of the circular saw and the sheath in the rearward orientation;
Figure 6B shows the vertical cross-section VI-VI with the sheath in the sideward orientation;
Figure 7 a cable outlet collar of the cable outlet.

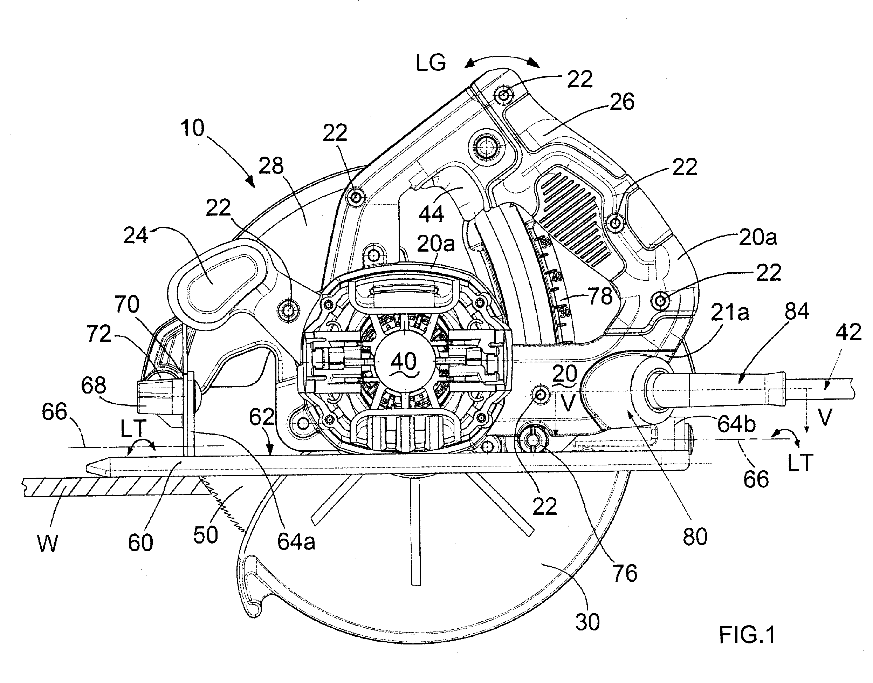

Referring to Figures 1 to 3, there is shown a hand-holdable circular saw 10 comprising a main housing 20, an electric motor 40 within a side of the main housing, a circular saw blade 50 driven by the motor via a gear box (not show) and a generally rectangular base plate 60 pivotally connected to the main housing about two axes.

The main housing 20 is formed by two opposing claim shells 20a,20b connected together by fasteners 22. A join line between the clamshells is parallel to the saw blade 50 and defines a central longitudinal plane 23 of the circular saw 10. The main housing comprises a front handle 24 and a rear handle 26. Both the front 24 and the rear 26 handles are grasped by a user when the circular saw is being used to cut a work-piece W. A fixed blade guard 28 is fixed to a side of the main housing. A pivotable blade guard 30 is pivotally coupled to the main housing to rotate about a central axis 52 of the saw blade 50. The fixed blade guard covers the upper portion of the saw blade 50. The pivotable blade guard 30 is biased by a spring (not shown) to cover the bottom of the saw blade 50. The pivotable blade guard rotates about the blade central axis 52 and progressively retracts within the fixed blade guard when it encounters a work-piece W being cut by the circular saw 10.

The motor 40 is electrically coupled to a flexible mains electric supply cable 42 via an on/off trigger switch 44. The on/off switch projects from inside the main handle 26 for manual operation by the user.

The saw blade 50 rotates when the motor 40 is energised by the electric supply. The saw blade protrudes through a slot 62 in the base plate

The base plate 60 provides the circular saw 10 with sliding support upon a work-piece W. The base plate comprises a pair of lateral pivot brackets 64a,64b located near opposite ends of the base plate and a longitudinal pivot bracket 72.

The main housing 20 is pivotable with respect to the base plate 60 in a lateral direction indicated by double-headed arrows LT about a lateral pivot axis 66 of the lateral pivot brackets 64a,64b. The lateral pivot axis is parallel to the circular saw blade 50 and to the longitudinal plane 23 of the circular saw 10. Lock nut 68 releasably secures the main housing against lateral movement with respect to the base plate 60.

The main housing 20 is pivotable with respect to the base plate 60 in a longitudinal direction indicated by double-headed arrow LG about a longitudinal pivot axis 74 of the longitudinal pivot bracket 72. The longitudinal pivot axis is perpendicular to the longitudinal plane 23 of the circular saw 10. Lock nut 76 releasably secures the main housing against longitudinal movement with respect to the base plate 60. The saw blade 50 pivots with the main body 20. Pivotal adjustment of the main housing in the direction of arrow LT allows the user to select angled mitre cuts in the work-piece within a range of zero degrees (saw blade perpendicular to the base plate) to 45 degrees (maximum mitre cut angle). The mitre cut angle is indicated on a scale 70 adjacent the lateral pivot bracket 64a. Pivotal adjustment of the main housing in the direction of arrow LG allows the user to select a depth of cut in the work-piece. The depth of cut is indicated on a scale 78 marked on the blade guard 28.

The clamshell 20a has a cable outlet 21a located under the rear handle 26. A generally cylindrical cable outlet collar 80 is attached around the cable outlet. A longitudinal central axis 82 of the cable outlet and cable outlet collar is inclined by an angle α with respect to the longitudinal plane of the circular saw 10. The angle α is approximately 45 degrees. The electric supply cable 42 projects through the cable outlet and the cable outlet collar. An exit point from a power tool, such as the cable outlet collar 80, is where an electric cable is mostly prone to damage caused over time by pinching, chafing, bending and other general wear. To help protect against such damage, and in doing so extend the life of the electric supply cable, a portion of the electric supply cable projecting through the cable outlet collar is clad with a tubular cable sheath 84.

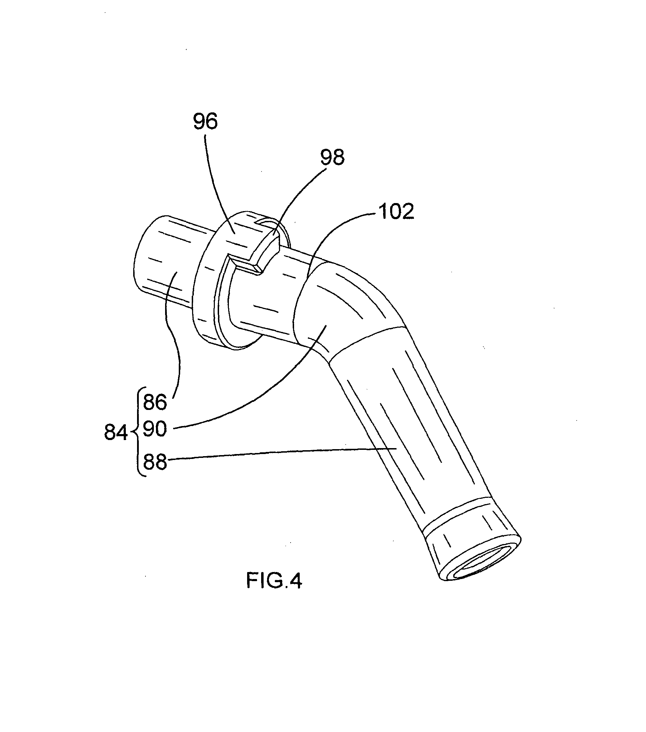

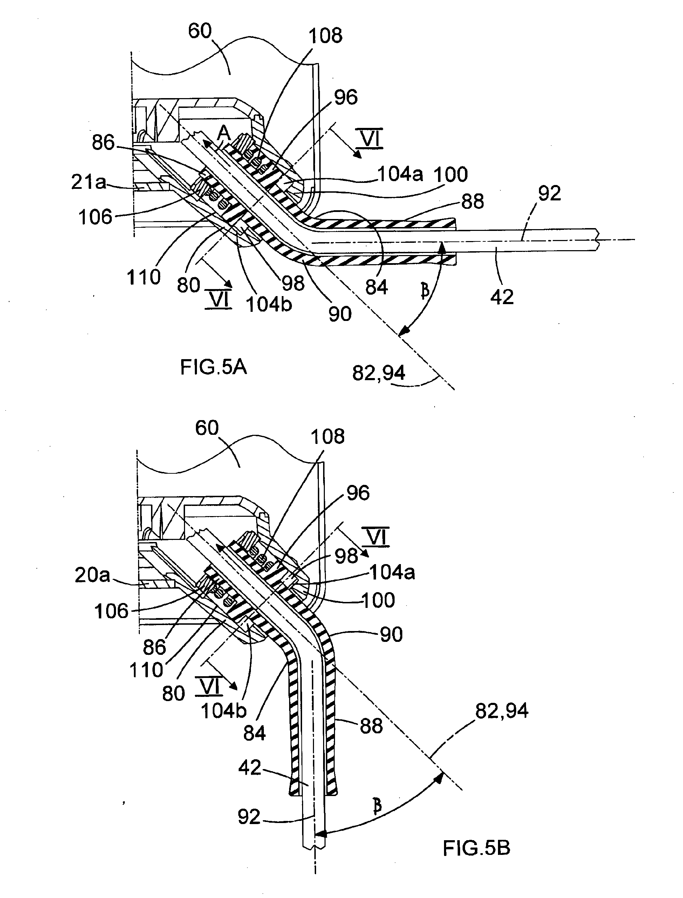

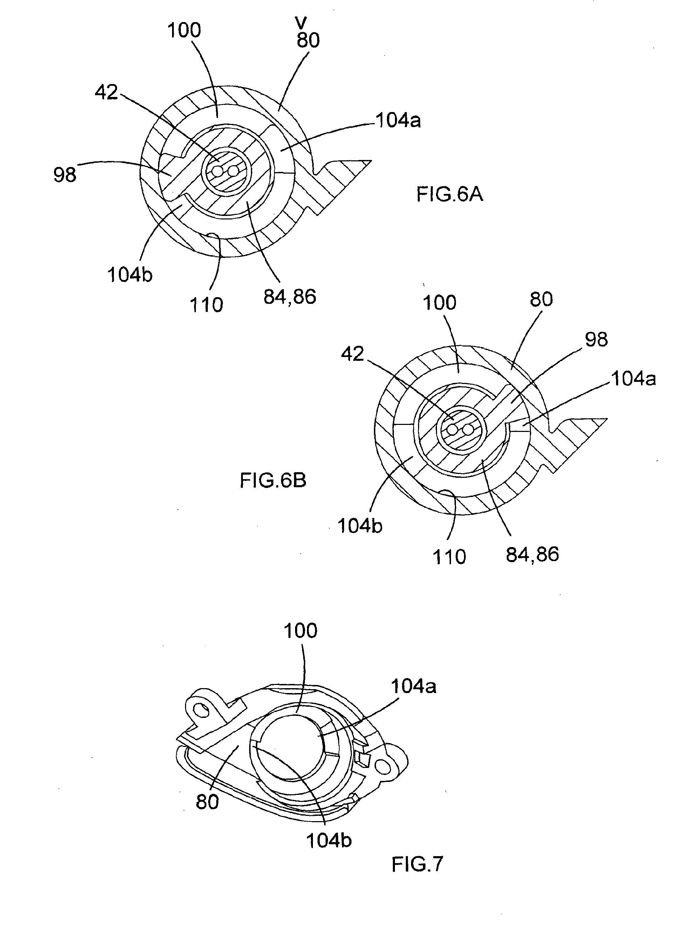

Referring to Figures 4 to 7, there is shown more detail on the cable outlet 21a from the clamshell 20a, the cable outlet collar 80 and the sheath 84. The sheath is made of rigid rubber material, although it may be made of any plastics material, or other material, which provides the sheath with sufficient flexibility, resilience and durability. The sheath comprises an inner portion 86 and an outer portion 88 joined by a curved portion 90 which kinks the inner and outer portions in different directions. The outer portion has a central longitudinal axis 92 which is inclined by an angle β with respect to a longitudinal central axis 94 through the inner portion. The angle β is approximately 45 degrees. The cable outlet collar surrounds the inner portion of the sheath. The inner portion central axis 94 is coaxial with the cable outlet central axis 82. The inner portion is circumscribed by an annular flange 96 with a tongue 98 facing axially towards the curved portion 90. The annular flange 96 and the tongue 98 are integral with the inner portion, although they could, optionally, be press fitted or adhered to the inner portion. Electric supply cable 42 protected by the sheath also curves at the curved portion by 45 degrees.

The cable outlet collar 80 comprises a cable outlet ring 100 at an opposite end to the clamshell 20a. The cable outlet ring is moulded as one piece with the cable outlet collar, although optionally the cable outlet ring may be a separate part fixed to the cable outlet collar. The cable outlet ring surrounds the inner portion 86 of the sheath 84 near a transition 102 between inner portion and curved portion 90 of the sheath. The interior of the cable outlet ring comprises a pair of diametrically opposed grooves 104a,104b facing axially towards the tongue 98 on the annular flange 96. Each groove is sized to accommodate the tongue with a small amount of additional space. This additional space is to allow for a small degree of play between walls of the tongue and grooves when engaged. The walls of the tongue and grooves are substantially parallel to the cable outlet central axis 82.

The cable outlet collar 80 comprises an annular bearing 106 fixed to an opposite end of the cable outlet collar with respect to the cable outlet ring 100. The cable outlet collar 80, the cable outlet ring 100 and annular bearing 106 are co-axial with each other and with the central axis 94 of the inner portion 86 of the sheath 84. The annular bearing surrounds the inner portion 86 of the sheath 84 near an extreme end of the inner portion. The cable outlet collar comprises a helical spring 108 in abutment with the annular bearing and the annular flange 96 on an opposite side to the tongue 98. The spring is held in compression between the annular bearing, the annular flange and an interior surface 110 of the cable outlet collar. The spring is coiled around the inner portion of the sheath 84 and biases the tongue 98 towards engagement with the grooves 104a,104b in the cable outlet ring 100. This locks the electric supply cable and the sheath against rotation about the cable outlet central axis 82.

Manoeuvre from the rearward orientation to the sideward orientation, and vice versa, is quick and easy to perform. Initially, a user of the circular saw 10 can manually push the electric supply cable 42 and the sheath 84 inwardly in the direction of arrow A towards the main housing 20 and against the bias of the spring 106 to disengage the tongue 98 from one of the grooves 104a,104b in the outlet ring 100. Next, the electric supply cable and the sheath may be rotated clockwise, or anti-clockwise, through 180 degrees about the central axis 94 of the sheath's inner portion 86 and released so as the tongue re-engages with the other of the grooves in the outlet ring. The small degree of play between walls of the tongue and grooves helps to avoid the tongue jamming in the groove during re-engagement. The parallel alignment of the walls of the tongue and grooves causes a step movement which provides the user with positive feedback of locking, or re-engagement, between tongue and groove. The central axis 92 of the sheath's outer portion 88 rotates with the sheath and, in doing so, is locked an orientation perpendicular to its position prior to its rotation through 180 degrees.

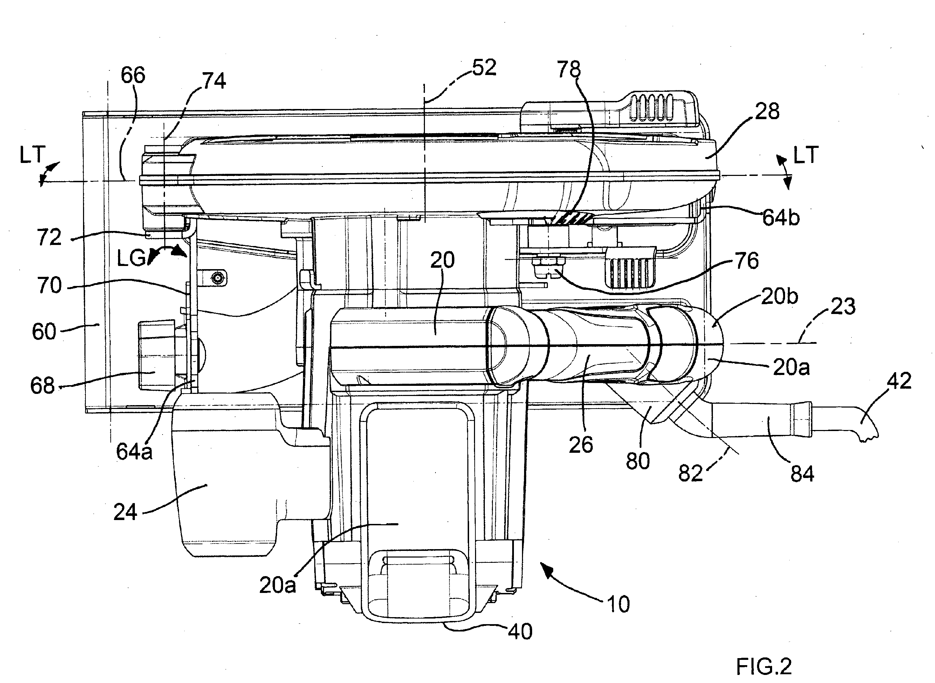

Returning to Figures 2, 5A and 6A, there is shown the electric supply cable 42 and the outer portion 88 of the sheath 84 orientated rearward with respect to the main housing 20 and generally parallel to the longitudinal plane 23 of the circular saw 10. The tongue 98 is engaged with the groove 104b.

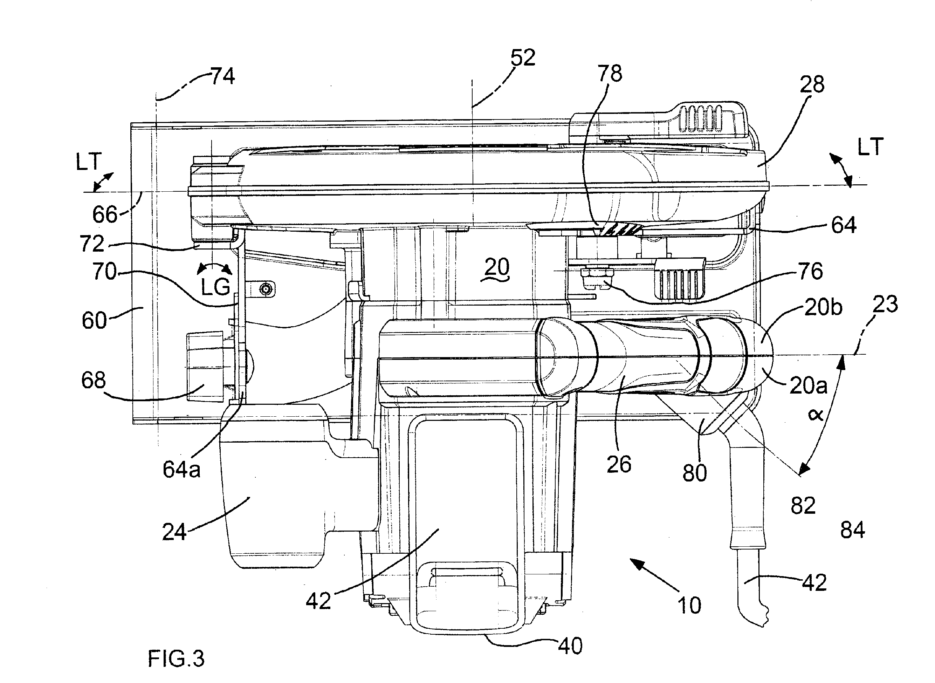

Returning to Figures 3, 5B and 6B, the electric supply cable 42 and the outer portion 88 of the sheath 84 have been rotated from the rearward orientation to an alternative orientation where they are orientated sideward with respect to the main housing 20 and generally perpendicular to the longitudinal plane 23 of the circular saw 10. The tongue 98 is engaged with the groove 104a.

The location of the work-piece W and the type of cut to be performed by the circular saw influences the user's choice of orientation of the sheath 84. A cut beginning with limited clearance behind the circular saw 10 may necessitate sideward orientation of the sheath to avoid contortion and weakening of the sheath. A mitre cut with the circular saw tilted by 45 degrees about the lateral pivot axis 66 may necessitate rearward orientation of the sheath to avoid electric supply cable obstructing the user and the user's line of sight. Commonly, users store their electric power tools with the electric supply cable wrapped about the main body or bundled into a storage box. This applies equally to the circular saw 10. The sheath 84 can be orientated to facilitate storage of the electric supply cable in a manner causing the minimum contortion and weakening of the sheath thereby prolonging its life. The skilled person will understand that other power tools may benefit from the advantages provided by the rotatable lockable electric supply cable sheath described herein.

## Claims

1. A power tool (10) comprising:
a housing (20,20a,20b);
a cable outlet (21a,80,100,106) through the housing wherein the cable outlet has a longitudinal central axis (82);
an electric motor (40) for driving a work tool (50) to perform a machining operation on a work-piece (W) wherein the motor is located in the housing;
a flexible electric supply cable (42) for supplying electric current to the motor;
a tubular sheath (84) for protecting supply cable projected through the cable outlet wherein the sheath is rotatable in relation to the cable outlet to change direction of unprotected supply cable in relation to the cable outlet; and
a locking means (98,104a,104b,108) for locking the sheath in a plurality of rotational orientations in relation to the cable outlet,
wherein the locking means comprises:
a receiving member (104a,104b) connected to one of the sheath or the cable outlet;
an engaging member (98) connected to the other of the sheath or the cable outlet; and
a biasing means (108) for biasing the engaging member into engagement with the receiving member to lock the sheath in one of the plurality of rotational orientations,
wherein movement of the sheath against the biasing means causes disengagement of the engaging member from the receiving member and unlocks the sheath for rotation in relation to the cable outlet;
**characterised in that** the sheath (84) directs the unprotected supply cable at an inclined angle away from the cable outlet central axis wherein the sheaf (84) is rotatable about the central axis (82) in relation to the cable outlet to change the direction of unprotected supply cable in relation to the cable outlet

2. A power tool as claimed in claim 1, wherein movement of the sheath (84) against the biasing means (108) is along the cable outlet central axis (82).

3. A power tool as claimed in either one of claims 1 or 2, wherein the cable outlet (21a) comprises a hollow substantially cylindrical cable outlet collar (80,100) to support movement of the sheath (84) along the cable outlet central axis (82).

4. A power tool (10) as claimed in claim 3, wherein the cable outlet collar (80) comprises an annular bearing (106) through which projects the sheath (84) and wherein the annular bearing supports the biasing means (108) against the sheath (84).

5. A power tool (10) as claimed in claim 4, wherein the sheath (84) comprises an annular flange (96) fixed around the sheath and wherein an interior surface (110) of the outlet collar (80) supports sliding movement of the annular flange with respect to the cable outlet (21a).

6. A power tool (10) as claimed in claim 5, wherein the biasing means (108) is held in compression between the bearing (106), the annular flange (96) and the interior surface (110) of the cable outlet collar (80,100).

7. A power tool (10) as claimed in claim 6, wherein the biasing means comprises a helical spring (108) coiled around the sheath (84).

8. A power tool (10) as claimed any one of claims 5 to 7, wherein the receiving member comprises a ring (100) with a plurality of grooves (104a,104b) facing the engaging member (96), wherein the grooves are arranged at angular intervals about the cable outlet central axis (94) and wherein each groove corresponds to one of the plurality of rotational orientations of the sheath in relation to the cable outlet (21a,80,100,106).

9. A power tool (10) as claimed in claim 8, wherein the engaging member comprises at least one tongue (98) protruding radially outward from the sheath (84) and wherein the ring comprises a cable outlet ring (100) fixed to the cable outlet collar (80).

10. A power tool (10) as claimed in claim 9, wherein the at least one tongue (98) is connected to a side of the annular flange (96) facing the plurality of grooves (104a,104b).

11. A power tool (10) as claimed in claim 10, wherein the annular flange (96) abuts the cable outlet ring (100) upon engagement of the engaging (98) and receiving (104a,104b) members.

12. A power tool (10) as claimed in any one of claims 9 to 11, wherein sides of the at least one tongue (98) and the grooves (104a,104b) are substantially parallel with the cable outlet central axis (82).

13. A power tool (10) as claimed in any one of the previous claims, wherein the sheath (84) is kinked to direct unprotected electric supply cable at an angle (β) of substantially forty five degrees from the cable outlet central axis (82) and wherein two of the plurality of rotational orientations of the sheath are diametrically opposed.

14. A power tool (10) as claimed in any one of the previous claims, wherein the plurality of rotational orientations of the sheath (84) comprises two rotational orientations.

15. A power tool (10) as claimed in any one of the previous claims, wherein the sheath (84) is fixed to the electric supply cable (42) and / or the sheath is formed of rigid rubber material.

16. A power tool (10) as claimed in any one of the previous claims, wherein the power tool comprises a circular saw (10) with a base plate (60), wherein the work tool comprises a circular saw blade (50) with a central axis and wherein the height and / or the angle of inclination of the circular saw blade central axis in relation to the base plate are / is adjustable.

## Patentansprüche

1. Elektrowerkzeug (10), umfassend:
ein Gehäuse (20, 20a, 20b);
einen Kabelauslass (21a, 80, 100, 106) durch das Gehäuse, wobei der Kabelauslass eine längs verlaufende Mittelachse (82) aufweist;
einen Elektromotor (40) zum Antreiben eines Arbeitswerkzeugs (50) zum Ausführen eines maschinellen Arbeitsvorgangs an einem Werkstück (W), wobei sich der Motor im Gehäuse befindet;
ein flexibles Stromzufuhrkabel (42) zum Zuführen von elektrischem Strom zum Motor;
eine röhrenförmige Umhüllung (84) zum Schützen des Stromzufuhrkabels, die durch den Kabelauslass vorsteht, wobei die Umhüllung bezüglich des Kabelauslasses zum Ändern der Richtung des ungeschützten Stromzufuhrkabels bezüglich des Kabelauslasses drehbar ist; und
ein Sperrmittel (98, 104a, 104b, 108) zum Sperren der Umhüllung in mehreren Drehausrichtungen bezüglich des Kabelauslasses,
wobei das Sperrmittel Folgendes umfasst:
ein Aufnahmeglied (104a, 104b), das mit einem der Umhüllung oder des Kabelauslasses verbunden ist;
ein Eingriffsglied (98), das mit dem anderen der Umhüllung oder des Kabelauslasses verbunden ist; und ein Vorspannglied (108) zum Vorspannen des Eingriffsglieds in Eingriff mit dem Aufnahmeglied zum Sperren der Umhüllung in einer der mehreren Drehausrichtungen,
wobei Bewegung der Umhüllung gegen das Vorspannglied die Freigabe des Eingriffsglieds aus dem Aufnahmeglied bewirkt und die Umhüllung zur Drehung bezüglich des Kabelauslasses entsperrt;
**dadurch gekennzeichnet, dass** die Umhüllung (84) das ungeschützte Stromzufuhrkabel in einem Neigungswinkel weg von der Mittelachse des Kabelauslasses richtet, wobei die Umhüllung (84) um die Mittelachse (82) bezüglich des Kabelauslasses zum Ändern der Richtung des ungeschützten Stromzufuhrkabels bezüglich des Kabelauslasses drehbar ist.

2. Elektrowerkzeug nach Anspruch 1, wobei Bewegung der Umhüllung (84) gegen das Vorspannglied (108) entlang der Mittelachse (82) des Kabelauslasses erfolgt.

3. Elektrowerkzeug nach einem der Ansprüche 1 oder 2, wobei der Kabelauslass (21a) einen hohlen, im Wesentlichen zylindrischen Kabelauslasshals (80, 100) zum Unterstützen der Bewegung der Umhüllung (84) entlang der Mittelachse (82) des Kabelauslasses umfasst.

4. Elektrowerkzeug (10) nach Anspruch 3, wobei der Kabelauslasshals (80) ein ringförmiges Lager (106) umfasst, durch das die Umhüllung (84) vorsteht, und wobei das ringförmige Lager das Vorspannglied (108) gegen die Umhüllung (84) stützt.

5. Elektrowerkzeug (10) nach Anspruch 4, wobei die Umhüllung (84) einen ringförmigen Flansch (96) umfasst, der um die Umhüllung herum befestigt ist, und wobei eine Innenfläche (110) des Auslasshalses (80) eine Gleitbewegung des ringförmigen Flanschs bezüglich des Kabelauslasses (21a) unterstützt.

6. Elektrowerkzeug (10) nach Anspruch 5, wobei das Vorspannglied (108) in Kompression zwischen dem Lager (106), dem ringförmigen Flansch (96) und der Innenfläche (110) des Kabelauslasshalses (80, 100) gehalten ist.

7. Elektrowerkzeug (10) nach Anspruch 6, wobei das Vorspannglied eine Schraubenfeder (108) umfasst, die um die Umhüllung (84) gewickelt ist.

8. Elektrowerkzeug (10) nach einem der Ansprüche 5 bis 7, wobei einen Ring (100) mit mehreren Nuten (104a, 104b) umfasst, der dem Eingriffsglied (96) zugekehrt ist, wobei die Nuten in Winkelintervallen um die Mittelachse (94) des Kabelauslasses angeordnet sind, und wobei jede Nut einer der mehreren Drehausrichtungen der Umhüllung in Bezug zum Kabelauslass (21a, 80, 100, 106) entspricht.

9. Elektrowerkzeug (10) nach Anspruch 8, wobei das Eingriffsglied zumindest eine Zunge (98) umfasst, die radial von der Umhüllung (84) nach außen vorsteht, und wobei der Ring einen Kabelauslassring (100) umfasst, der am Kabelauslasshals (80) befestigt ist.

10. Elektrowerkzeug (10) nach Anspruch 9, wobei die zumindest eine Zunge (98) mit einer Seite des ringförmigen Flanschs (96) verbunden ist, die den mehreren Nuten (104a, 104b) zugekehrt ist.

11. Elektrowerkzeug (10) nach Anspruch 10, wobei der ringförmige Flansch (96) nach Ineingriffnahme des Eingriffs- (98) und Aufnahmeglieds (104a, 104b) an den Kabelauslassring (100) anstößt.

12. Elektrowerkzeug (10) nach einem der Ansprüche 9 bis 11, wobei Seiten der zumindest einen Zunge (98) und der Nute (104a, 104b) im Wesentlichen parallel zur Mittelachse (82) des Kabelauslasses sind.

13. Elektrowerkzeug (10) nach einem der vorhergehenden Ansprüche, wobei die Umhüllung (84) zum Leiten des ungeschützten Stromzufuhrkabels in einem Winkel (β) von im Wesentlichen 45 Grad aus der Mittelachse (82) des Kabelauslasses geknickt ist, und wobei zwei der mehreren Drehungsausrichtungen der Umhüllung diametral entgegengesetzt sind.

14. Elektrowerkzeug (10) nach einem der vorhergehenden Ansprüche, wobei die mehreren Drehausrichtungen der Umhüllung (84) zwei Drehausrichtungen umfassen.

15. Elektrowerkzeug (10) nach einem der vorhergehenden Ansprüche, wobei die Umhüllung (84) am Stromzufuhrkabel (42) befestigt ist und/oder die Umhüllung aus starrem Kautschukmaterial ausgebildet ist.

16. Elektrowerkzeug (10) nach einem der vorhergehenden Ansprüche, wobei das Elektrowerkzeug eine Kreissäge (10) mit einer Basisplatte (60) umfasst, wobei das Arbeitswerkzeug ein Kreissägenblatt (50) mit einer Mittelachse umfasst, und wobei die Höhe und/oder der Neigungswinkel der Mittelachse des Kreissägenblatts bezüglich der Basisplatte einstellbar ist/sind.

## Revendications

1. Outil électrique (10) comprenant :
un logement (20, 20a, 20b) ;
une sortie de câble (21a, 80, 100, 106) à travers le logement dans lequel la sortie de câble a un axe central longitudinal (82) ;
un moteur électrique (40) pour entraîner un outil de travail (50) pour effectuer une opération d'usinage sur une pièce de travail (W) dans lequel le moteur est situé dans le logement ;
un câble d'alimentation électrique souple (42) pour fournir un courant électrique au moteur ;
une gaine tubulaire (84) pour protéger le câble d'alimentation projeté à travers la sortie de câble dans laquelle la gaine est rotative par rapport à la sortie de câble pour changer la direction de câble d'alimentation non protégé par rapport à la sortie de câble ; et
un moyen de verrouillage (98, 104a, 104b, 108) pour verrouiller la gaine dans une pluralité d'orientations en rotation par rapport à la sortie de câble,
dans lequel le moyen de verrouillage comprend :
un élément de réception (104a, 104b) relié à une de la gaine ou de la sortie de câble ;
un élément de mise en prise (98) relié à l'autre de la gaine ou de la sortie de câble ; et
un élément de sollicitation (108) pour solliciter l'élément de mise en prise pour le mettre en prise avec l'élément de réception pour verrouiller la gaine dans une de la pluralité d'orientations en rotation,
dans lequel le mouvement de la gaine contre le moyen de sollicitation provoque le dégagement de l'élément de mise en prise depuis l'élément de réception et déverrouille la gaine pour rotation par rapport à la sortie de câble ;
**caractérisé en ce que** la gaine (84) dirige le câble d'alimentation non protégé à un angle incliné loin de l'axe central de sortie de câble dans lequel la gaine (84) est rotative autour de l'axe central (82) par rapport à la sortie de câble pour changer la direction de câble d'alimentation non protégé par rapport à la sortie de câble

2. Outil électrique selon la revendication 1, dans lequel un mouvement de la gaine (84) contre le moyen de déplacement (108) est le long de l'axe central de sortie de câble (82).

3. Outil électrique selon l'une ou l'autre des revendications 1 ou 2, dans lequel la sortie de câble (21a) comprend un collier de sortie de câble creux sensiblement cylindrique (80, 100) pour supporter un mouvement de la gaine (84) le long de l'axe central de sortie de câble (82).

4. Outil électrique (10) selon la revendication 3, dans lequel le collier de sortie de câble (80) comprend un palier annulaire (106) à travers lequel dépasse la gaine (84) et dans lequel le palier annulaire supporte le moyen de sollicitation (108) contre la gaine (84).

5. Outil électrique (10) selon la revendication 4, dans lequel la gaine (84) comprend une bride annulaire (96) fixée autour de la gaine et dans lequel une surface intérieure (110) du collier de sortie (80) supporte un mouvement coulissant de la bride annulaire par rapport à la sortie de câble (21a).

6. Outil électrique (10) selon la revendication 5, dans lequel le moyen de sollicitation (108) est maintenu en compression entre le palier (106), la bride annulaire (96) et la surface intérieure (110) du collier de sortie de câble (80, 100).

7. Outil électrique (10) selon la revendication 6, dans lequel le moyen de sollicitation comprend un ressort hélicoïdal (108) enroulé autour de la gaine (84).

8. Outil électrique (10) selon l'une quelconque des revendications 5 à 7, dans lequel l'élément de réception comprend une bague (100) avec une pluralité de rainures (104a, 104b) faisant face à l'élément de mise en prise (96), dans lequel les rainures sont agencées à des intervalles angulaires autour de l'axe central de sortie de câble (94) et dans lequel chaque rainure correspond à une de la pluralité d'orientations en rotation de la gaine par rapport à la sortie de câble (21a, 80, 100, 106).

9. Outil électrique (10) selon la revendication 8, dans lequel l'élément de mise en prise comprend au moins une languette (98) dépassant de façon radiale à l'extérieur de la gaine (84) et dans lequel la bague comprend une bague de sortie de câble (100) fixée au collier de sortie de câble (80).

10. Outil électrique (10) selon la revendication 9, dans lequel au moins une languette (98) est reliée à un côté de la bride annulaire (96) faisant face à la pluralité de rainures (104a, 104b).

11. Outil électrique (10) selon la revendication 10, dans lequel la bride annulaire (96) est contiguë à la bague de sortie de câble (100) lors de la mise en prise des éléments de mise en prise (98) et de réception (104a, 104b).

12. Outil électrique (10) selon l'une quelconque des revendications 9 à 11, dans lequel des côtés de l'au moins une languette (98) et les rainures (104a, 104b) sont sensiblement parallèles à l'axe central de sortie de câble (82).

13. Outil électrique (10) selon l'une quelconque des revendications précédentes, dans lequel la gaine (84) est repliée pour diriger un câble d'alimentation électrique non protégé à un angle (β) de sensiblement quarante-cinq degrés par rapport à l'axe central de sortie de câble (82) et dans lequel deux de la pluralité d'orientations en rotation de la gaine sont diamétralement opposées.

14. Outil électrique (10) selon l'une quelconque des revendications précédentes, dans lequel la pluralité d'orientations en rotation de la gaine (84) comprend deux orientations en rotation.

15. Outil électrique (10) selon l'une quelconque des revendications précédentes, dans lequel la gaine (84) est fixée au câble d'alimentation électrique (42) et/ou la gaine est formée de matière en caoutchouc rigide.

16. Outil électrique (10) selon l'une quelconque des revendications précédentes, dans lequel l'outil électrique comprend une scie circulaire (10) avec une embase (60), dans lequel l'outil de travail comprend une lame de scie circulaire (50) avec un axe central et dans lequel la hauteur et/ou l'angle d'inclinaison de l'axe central de lame de scie circulaire par rapport à l'embase est/sont réglable(s).
